# EUROPÄISCHE PATENTSCHRIFT

(11) **EP 3 753 083 B1**
(45) Veröffentlichungstag und Bekanntmachung des Hinweises auf die Patenterteilung: **27.05.2026**
(21) Anmeldenummer: 18720526.5
(22) Anmeldetag: 09.04.2018
(51) Int. Cl.: H02J 3/18, H01F 29/14

(54) **STUFENLOS REGELBARE SÄTTIGUNGSDROSSEL**
CONTINUOUSLY ADJUSTABLE SATURABLE REACTOR
BOBINE À NOYAU SATURABLE À RÉGLAGE CONTINU

(43) Veröffentlichungstag der Anmeldung: 23.12.2020
(73) Patentinhaber: Siemens Energy Global GmbH & Co. KG, 81739 München (DE)
(72) Erfinder: KÜSTERMANN, Matthias, 90408 Nürnberg (DE); MANTHE, Thomas, 17373 Ueckermünde (DE); BUNIN, Anatoliy, 90547 Stein (DE); SCHWENDNER, Martin, 91154 Roth (DE)
(86) Internationale Anmeldenummer: PCT/EP2018/059028
(87) Internationale Veröffentlichungsnummer: WO 2019/197014

(56) Entgegenhaltungen:
- WO-A1-2004/054065
- DE-A1- 102012 110 969
- US-A- 3 611 224
- US-A1- 2002 050 829
- US-B1- 6 420 856

## Beschreibung

Die Erfindung betrifft eine Vorrichtung nach dem Obergriff des Patentanspruchs 1.

Eine solche Vorrichtung ist aus der EP 3 168 708 A1 bereits bekannt. Dort ist ein so genannter "Full Variable Shunt Reactor" (FVSR) offenbart, der eine Weiterentwicklung eines "Magnetically Controlled Shunt Reactor" (MCSR) dargestellt. Die vorbekannte Vorrichtung verfügt über zwei einander parallel geschaltete Hochspannungswicklungen, die jeweils einen Kernschenkel eines geschlossenen Eisenkerns umschließen und an ihrem Hochspannungsende an einen Phasenleiter eines Hochspannungsnetzes angeschlossen sind. Die Niederspannungsseiten der Hochspannungswicklungen sind mit Hilfe eines Transistorschalters entweder mit einem zweckmäßig polarisierten Thyristorstromrichter oder direkt mit einem Erdanschluss verbind-bar. Der Thyristorstromrichter ist zum Erzeugen eines Gleichstroms in der mit ihm verbundenen Hochspannungswicklung eingerichtet. Dabei wird der Gleichstrom so eingestellt, dass der von der Wicklung umschlossene Kernschenkel in einen gewünschten Sättigungszustand getrieben wird. In diesem Sättigungszustand weist das Kernmaterial beispielsweise eine sehr kleine magnetische Permeabilität auf, wodurch sich der magnetische Widerstand der Wicklung erhöht und deren Induktivität abgesenkt wird. Die Sättigung der besagten Kernabschnitte ist polarisationsabhängig, so dass ein über die Wicklungen fließender Wechselstrom je nach seiner Polarisierung im Wesentlichen nur über eine der beiden Hochspannungswicklungen fließt. So fließt beispielsweise ein positiver Wechselstrom über die erste Hochspannungswicklung während ein negativer Wechselstrom über die zweite Hochspannungswicklung zur Erde hin abfließt. Wird der Strom nur über eine Hochspannungswicklung getrieben, kann die jeweils andere Wicklung, die gerade nicht vom Wechselstrom durchströmt wird, mit einem Gleichstrom beaufschlagt werden, um den von ihr umschlossenen Kernschenkel in dem gewünschten Maß zu sättigen.

Magnetisch gesteuerte Drosselspulen sind ferner aus der DE 20 2013 004 706 U1, der WO 2004/054065 A1 und der DE 10 2012 110 969 bekannt.

Der eingangs genannten Vorrichtung haftet der Nachteil an, dass diese hinsichtlich ihres Aufbaus aufwändig und somit kostenintensiv ist. So sind beispielsweise RC-Glieder notwendig, um Überspannungen an der Niederspannungsseite der Hochspannungswicklung zu vermeiden. Darüber hinaus sind neben den Thyristorstromrichtern Transistorschalter notwendig.

Aufgabe der Erfindung ist es daher, eine Vorrichtung der eingangs genannten Art bereitzustellen, die in ihrem Aufbau einfach und somit kostengünstig ist.

Die Erfindung löst diese Aufgabe dadurch, dass jeder Sättigungsschaltzweig wenigstens ein zweipoliges Submodul mit einer Brückenschaltung aufweist, die über Leistungshalbleiterschalter und eine Gleichspannungsquelle verfügt, so dass je nach Ansteuerung der Leistungshalbleiterschalter die Gleichspannungsquelle entweder in Reihe zu wenigstens einer Hochspannungswicklung schaltbar oder überbrückbar ist.

Erfindungsgemäß umfasst der Sättigungsschaltzweig, der entweder mit beiden oder mit einer Hochspannungswicklung verbindbar ist, eine Brückenschaltung. Die Brückenschaltung ermöglicht ein flexibles Zuschalten einer Gleichspannungsquelle, die für die gewünschte Sättigung des Kernabschnitts sorgt. Dazu ist die Brückenschaltung so eingerichtet, dass die Gleichspannungsquelle in Reihe zur jeweiligen Hochspannungswicklung geschaltet werden kann, wobei sichergestellt ist, dass die Gleichspannungsquelle die gewünschte Polarität aufweist. So wird beispielsweise die Gleichspannungsquelle bei einer negativen Halbwelle der Wechselspannung der ersten Hochspannungswicklung so in Reihe geschaltet, dass diese einen Gleichstrom durch die erste Hochspannungswicklung treibt, der von der Gleichspannungsquelle zur Hochspannungswicklung fließt. In einer zweiten Schaltstellung der Brückenschaltung ist die Gleichspannungsquelle hingegen überbrückt, so dass Wechselstrom von der ersten Hochspannungswicklung zu einem beispielsweise geerdeten Potenzialpunkt hin abfließen kann.

Hierzu sei ergänzend angemerkt, dass zu einem vorgegebenen Zeitpunkt nur die Verbindung eines Sättigungsschaltzweiges mit einer Hochspannungswicklung praktisch sinnvoll ist. Nur in einer Überbrückungsstellung des oder der Schaltzweige sind alle Hochspannungswicklungen an ihrer Niederspannungsseite miteinander verbunden.

Der zweiten Hochspannungswicklung kann im Rahmen der Erfindung entweder die gleiche Gleichspannungsquelle oder auch eine andere Gleichspannungsquelle hinzu geschaltet werden. Die Gleichspannungsquellen sind zweckmäßigerweise identisch ausgestaltet, können sich im Rahmen der Erfindung jedoch auch voneinander unterscheiden. Im Rahmen der Erfindung wird die Gleichspannungsquelle der zweiten Hochspannungswicklung mit einer gegensinnigen Polarität zugeschaltet, so dass der Sättigungsgleichstrom bei einer Reihenschaltung von der zweiten Hochspannungswicklung zur Erde fließt. Dies sorgt dann für eine entsprechend polarisierte Sättigung des zweiten Kernabschnitts.

Die Brückenschaltung ist im Rahmen der Erfindung eine Schaltung aus den Leistungshalbleiterschaltern und der Gleichspannungsquelle, die es ermöglicht an den beiden Anschlussklemmen der Brückenschaltung oder mit anderen Werten des Submoduls entweder die an der Gleichspannungsquelle abfallende Spannung zu erzeugen oder eine Nullspannung, bei der die Gleichspannungsquelle überbrückt ist. So ist die Brückenschaltung beispielsweise eine Halbbrückenschaltung oder mit anderen Worten als Halbbrücke ausgeführt. Bei dieser vorteilhaften Weiterentwicklung der Erfindung ist für die erste Hochspannungswicklung und die zweite Hochspannungswicklung ein jeweils eigener Sättigungsschaltzweig notwendig, wobei die Gleichspannungsquelle, die der ersten Hochspannungswicklung zugeordnet ist, eine zur Gleichspannungsquelle, die der zweiten Hochspannungswicklung zugeschaltet ist, entgegengesetzte Polarität aufweist. Umfasst jeder Schaltzweig mehrere Submodule und somit mehrere Gleichspannungsquellen, weisen diese in Bezug auf die jeweils zugeordnete Hochspannungswicklung die gleiche Polarität auf. Eine Halbbrückenschaltung verfügt über einen einzigen Reihenschaltungszweig aus zwei Leistungshalbleiterschaltern, welcher der Gleichspannungsquelle parallel geschaltet ist. Eine Anschlussklemme des Submoduls ist mit dem Potenzialpunkt zwischen den Leistungshalbleiterschaltern des Reihenschaltungszweigs und die andere Anschlussklemme mit einem Pol der Gleichspannungsquelle verbunden.

Bevorzugt ist die Brückenschaltung jedoch als so genannte Vollbrückenschaltung oder H-Schaltung ausgebildet, so dass durch die Ansteuerung der Leistungshalbleiterschalter nicht nur die an der Gleichspannungsquelle abfallende Quellenspannung, sondern auch die inverse Quellenspannung an die Anschlussklemmen gelegt werden kann. Sowohl die Halbbrückenschaltung als auch die Vollbrückenschaltung ermöglichen die Überbrückung ihrer Gleichspannungsquelle.

Insbesondere mit Hilfe der Brückenschaltung ist im Rahmen der Erfindung eine kostengünstige Weiterentwicklung der eingangs genannten Vorrichtung geschaffen. RC-Glieder zur Spannungsbegrenzung sind im Rahmen der Erfindung überflüssig geworden. Darüber hinaus entfällt die Notwendigkeit von Thyristorstromrichtern zusätzlich zu einem Transistorschalter. Im Rahmen der Erfindung umfasst jeder Sättigungsschaltzweig wenigstens ein zweipoliges Submodul mit einer Brückenschaltung. Jeder Schaltzweig ist an seinem von der jeweiligen Hochspannungswicklung abgewandten Ende mit einem beiden Hochspannungswicklungen gemeinsamen Potenzialpunkt verbindbar.

Gemäß einer vorteilhaften Weiterentwicklung ist jeder Sättigungsschaltzweig an seiner von der zugeordneten Hochspannungswicklung abgewandten Seite mit einem Erdanschluss verbindbar. Mit anderen Worten ist der niederspannungsseitige Potenzialpunkt, mit dem beide Hochspannungswicklungen verbunden werden können, ein Erdanschluss.

Vorteilhafterweise ist jedes Submodul eine Vollbrückenschaltung, die einen ersten Reihenschaltungszweig und einen zweiten Reihenschaltungszweig aufweist, die der Gleichspannungsquelle jeweils parallel geschaltet sind, wobei jeder Reihenschaltungszweig eine Reihenschaltung aus Leistungshalbleiterschaltern aufweist, der Potenzialpunkt zwischen den Leistungshalbleiterschaltern des ersten Reihenschaltungszweigs mit einer ersten Anschlussklemme des Submoduls und der Potenzialpunkt zwischen Leistungshalbleiterschaltern des zweiten Reihenschaltungszweigs mit der zweiten Anschlussklemme des Submoduls verbunden ist. Wie bereits weiter oben ausgeführt wurde, besteht bei einer solchen Vollbrückenschaltung die Möglichkeit, an den beiden Anschlussklemmen entweder die an der Gleichspannungsquelle abfallende Quellenspannung, eine Nullspannung oder aber die inverse Quellenspannung zu erzeugen. Bei einer Vollbrücke ist daher grundsätzlich ein einzelner Sättigungsschaltzweig ausreichend, um Sättigungsgleichströme mit der gewünschten Polarisation durch jede Hochspannungswicklung zu treiben.

Im Rahmen dieser Weiterentwicklung ist es jedoch auch möglich, dass jeder Hochspannungswicklung ein eigener separater Sättigungsschaltzweig zugeordnet ist, wobei beide Sättigungsschaltzweige über Submodule mit Vollbrückenschaltung verfügen.

Im Rahmen der Erfindung sind alle Submodule bevorzugt identisch ausgestaltet.

Zweckmäßigerweise ist jeder Leistungshalbleiterschalter ein so genannter IGBT mit gegensinnig parallel geschalteter Freilaufdiode, ein so genannter GTO, ein Transistorschalter oder dergleichen. Leistungshalbleiterschalter sind im Sinne der hier vorliegenden Erfindung ansteuerbare Leistungshalbleiter. Ansteuerbare Leistungshalbleiter sind beispielsweise Thyristoren, IGBTs, GTOs, Transistorschalter oder dergleichen. Die Freilaufdioden sind als solche zwar nicht ansteuerbar, sollen aber wenn diese einem ansteuerbaren Leistungshalbleiter, beispielsweise einem IGBT, gegensinnig parallel geschaltet sind, von dem Begriff "Leistungshalbleiterschalter" mit umfasst sein. Sie dienen in diesem Falle ja lediglich dem Schutz des ebenfalls vom Begriff erfassten ansteuerbaren Leistungshalbleiters vor einer Überspannung. Bevorzugt werden im Rahmen der Erfindung sowohl ein- als auch abschaltbaren Leistungshalbleiterschalter eingesetzt. Leistungshalbleiterschalter, wie beispielsweise Thyristoren, fallen nicht in diese Kategorie, da diese lediglich gezündet, jedoch nicht durch ein Steuersignal wieder in ihre Sperrstellung überführt werden können. Solche Leistungshalbleiterschalter sind dem Fachmann jedoch bestens bekannt, so dass an dieser Stelle auf eine detailliertere Ausführung verzichtet werden kann.

Vorteilhafterweise verfügt jeder Sättigungsschaltzweig über eine Reihenschaltung aus wenigstens zwei Submodulen. Die zweipoligen Submodule ermöglichen eine einfache Skalierbarkeit des Sättigungsschaltzweigs. Jeder Leistungshalbleiterschalter ist auf eine bestimmte maximal schaltbare Spannung begrenzt. Diese liegt beispielsweise zwischen 2 und 5 kV. Werden zur Sättigung der Kernabschnitte höhere Spannungen benötigt, kann durch die Reihenschaltung der Submodule diese Anforderung auf einfache Art erfüllt werden.

Vorteilhafterweise umfasst jede Gleichspannungsquelle einen Energiespeicher. Als Energiespeicher kommen vorteilhafterweise elektrische Energiespeicher in Betracht, die vorzugsweise unipolar sind. So kommen als Energiespeicher beispielsweise Kondensatoren, Super-Kondensatoren, supraleitende Spulen, Batterieakkumulatoren, Supercaps oder dergleichen in Betracht. Die aufgezählten oder andere elektrische Energiespeicher können in einem Submodul einzeln auftauchen oder aber in Reihe geschaltet sein, wobei auf diese Reihenschaltung mit dem Begriff "Energiespeicher" insgesamt Bezug genommen wird.

Zweckmäßigerweise ist der Energiespeicher mit einer Ladeeinheit zum Aufladen des Energiespeichers verbunden. Die Ladeeinheit kann im Rahmen der Erfindung beliebig ausgebildet sein. Wesentlich ist jedoch, dass sie die beim Betrieb erforderliche elektrische Leistung für den Energiespeicher bereitstellt.

Gemäß einer diesbezüglich zweckmäßigen Weiterentwicklung verfügt die Ladeeinheit über einen mit einer Wechselspannungsquelle verbundenen Gleichrichter. In diesem Fall ist der Energiespeicher zweckmäßigerweise als Kondensator ausgebildet. Die Wechselspannungsquelle ist beispielsweise eine vom Hochspannungsnetz unabhängige Wechselspannungsquelle. Beispielsweise ist die Wechselspannungsquelle ein üblicher Starkstromanschluss im Niedervoltbereich. Abweichend davon liegt die Spannungsebene der Wechselspannungsquelle im Bereich der Mittelspannung, also in einem Bereich zwischen 1 kV und 52 kV. Im Rahmen der Erfindung ist es ferner möglich, die zum Laden notwendige Leistung aus dem Wechsel- oder Hochspannungsnetz zu entnehmen, zu dessen Blindleistungskompensation die erfindungsgemäße Vorrichtung dient.

Vorteilhafterweise ist für jede Hochspannungswicklung ein Sättigungsschaltzweig vorgesehen. Wie bereits weiter oben ausgeführt wurde, weist ein solcher Sättigungsschaltzweig im Rahmen der Erfindung wenigstens ein zweipoliges Submodul auf, das zweckmäßigerweise über eine Voll- oder Halbbrückenschaltung verfügt.

Gemäß einer Weiterentwicklung der Erfindung sind so genannte Ausgleichswicklungen vorgesehen, die für eine Filterung der Wechselspannung sorgen, so dass es zu keinen größeren Netzverzerrungen im angeschlossenen Hochspannungsnetz kommt. Diese Ausgleichswicklungen können gemäß einer vorteilhaften Weiterentwicklung induktiv mit dem Energiespeicher gekoppelt sein. Selbstverständlich ist eine induktive Kopplung zur Energieversorgung des Energiespeichers auch ohne Ausgleichswicklungen möglich.

Vorteilhafterweise ist jeder Kernabschnitt, jede Hochspannungswicklung und jeder Sättigungsschaltzweig in einem Kessel angeordnet, der mit einem Isolierfluid befüllt ist. Der Kessel liegt vorteilhafterweise auf einem Erdpotential. Abweichend hiervon sind die Kernabschnitte und die Wicklungen in einem ersten Kessel und jeder Schaltzweig in einem zweiten separaten Kessel angeordnet, wobei jeder Kessel mit einem Isolierfluid befüllt ist. Dabei können unterschiedliche Isolierfluide, also eine Isolierflüssigkeit und/oder ein Isoliergas, in den Kesseln eingesetzt werden. Zweckmäßigerweise sind der erste und der zweite Kessel, die beide auf einen Erdpotential liegen, über Hochspannungsdurchführungen elektrisch miteinander verbunden.

Die Erfindung betrifft auch ein Verfahren zur Blindleistungskompensation in einem wenigstens einen Phasenleiter aufweisenden Hochspannungsnetz, der eine Netzwechselspannung führt, wobei jeder Phasenleiter über einen Hochspannungsanschluss mit einer ersten Hochspannungswicklung und einer zu dieser parallel geschalteten zweiten Hochspannungswicklung verbunden ist, die jeweils einen ersten und einen zweiten Kernabschnitt umschließen, wobei jede Hochspannungswicklung über wenigstens einen Sättigungsschaltzweig mit einem Erdanschluss verbindbar ist, der wenigstens ein Submodul mit einer Brückenschaltung aus einer Gleichspannungsquelle und Leistungshableiterschaltern aufweist, bei dem bei einer positiven Netzwechselspannung die Leistungshalbleiterschalter beispielsweise so angesteuert werden, dass durch die zweite Hochspannungswicklung ein negativer Gleichstrom fließt und bei einer negativen Netzwechselspannung die Leistungshalbleiter so angesteuert werden, dass durch die erste Hochspannungswicklung ein positiver Gleichstrom fließt, wobei die Gleichströme so eingestellt werden, dass eine gewünschte Sättigung der von den Hochspannungswicklungen umschlossenen Kernabschnitte erzeugt wird.

Erfindungsgemäß kann mit Hilfe einer Brückenschaltung, die Teil eines zweipoligen Submoduls ist, derjenige Kernabschnitt gesättigt werden, dessen Wicklung in der jeweils herrschenden Halbperiode der Wechselspannung von keinem oder einem Wechselstrom durchflossen wird, der einen vorgegebenen Schwellenwert nicht überschreitet. Dabei ermöglicht die Ansteuerung der Brückenschaltung auf besonders einfache Art und Weise die gewünschte Kernsättigung. Das abgestimmte Ansteuern von Transistorschaltern und Thyristorventilen, das grundsätzlich zu dem gleichen Erfolg führen kann, ist vergleichsweise aufwändig, so dass erfindungsgemäß auch ein einfaches und kostengünstiges Verfahren bereitgestellt ist.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung in einer schematischen Darstellung,
- Figur 2: die Sättigungsschaltzweige der Vorrichtung gemäß Figur 1,
- Figur 3: ein weiteres Ausführungsbeispiel der erfindungsgemäßen Vorrichtung,
- Figur 4: eine mögliche Ladeeinheit für die erfindungsgemäße Vorrichtung,
- Figur 5: ein Submodul für einen Sättigungsschaltzweig in einer schematischen Darstellung,
- Figur 6: ein weiteres Ausführungsbeispiel der erfindungsgemäßen Vorrichtung mit einer Ladeeinheit für zwei Sättigungsschaltzweige und
- Figur 7: ein weiteres Ausführungsbeispiel der erfindungsgemäßen Vorrichtung verdeutlichen.

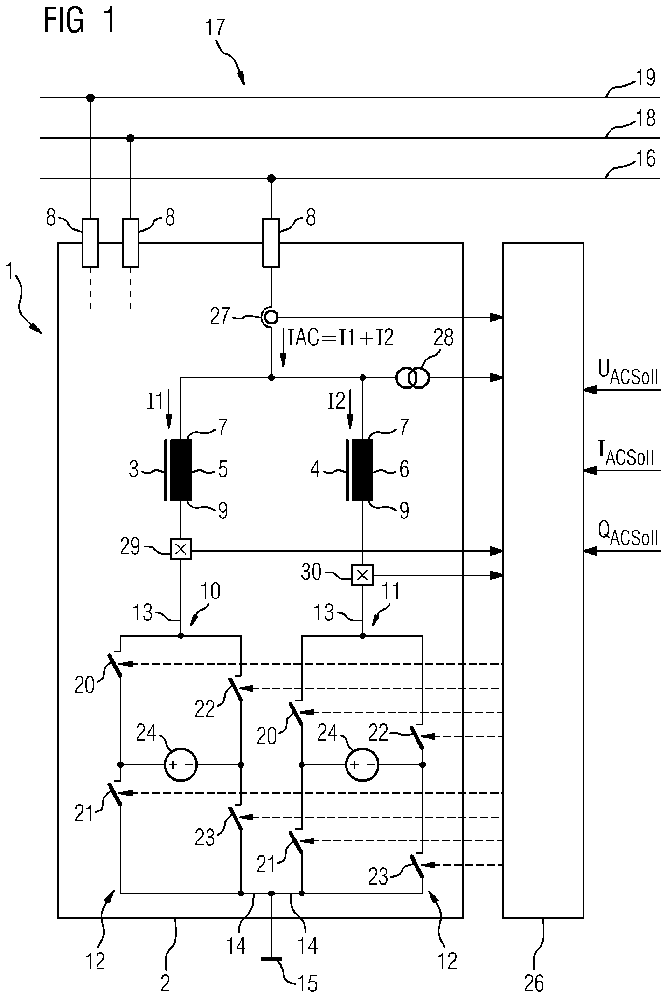

Figur 1 zeigt ein Ausführungsbeispiel der erfindungsgemäßen Vorrichtung 1, die einen mit einem Isolierfluid befüllten Kessel 2 aufweist. Als Isolierfluid kommen mineralische Öle, aber auch Esterflüssigkeiten oder dergleichen in Betracht. Das Isolierfluid stellt zum einen die notwendige Spannungsfestigkeit für Bauteile der Vorrichtung 1, die auf einem Hochspannungspotenzial liegen, gegenüber dem Kessel 2 auf Erdpotenzial bereit. Darüber hinaus dient das Isolierfluid zur Kühlung der beim Betrieb Wärme entwickelnden Komponenten.

Innerhalb des Kessels 2 ist ein Kern angeordnet, der aus einem magnetisierbaren Material, hier flächig aneinander anliegenden Eisenblechen, zusammengesetzt ist, und einen ersten Kernschenkel 3 sowie einen zweiten Kernschenkel 4 als Kernabschnitte ausbildet. Der erste Kernschenkel 3 ist von einer ersten Hochspannungswicklung 5 umschlossen. Der zweite Kernschenkel 4 ist von einer zweiten Hochspannungswicklung 6 umgeben. Zur Ausbildung eines geschlossenen Magnet- oder Eisenkreises dienen figürlich nicht dargestellte Joche, die sich von dem oberen Ende des ersten Kernschenkels 3 zum oberen Ende des zweiten Kernschenkels 4 sowie vom unteren Ende des Kernschenkels 3 zum unteren Ende des Kernschenkels 4 erstrecken. Darüber hinaus sind zwei figürlich ebenfalls nicht dargestellte Rückflussschenkel vorgesehen, die von keiner Wicklung umschlossen sind und sich rechts und links parallel zu den Kernschenkeln 3 beziehungsweise 4 erstrecken. Mit anderen Worten ist ein so genannter 2/2-Kern bereitgestellt.

Die erste Hochspannungswicklung 5 und die zweite Hochspannungswicklung 6 weisen jeweils ein Hochspannungsende 7 auf, mit dem diese mit einem Hochspannungsanschluss 8 verbunden sind. Ist die Vorrichtung 1 in einem mit Isolierfluid befüllten Kessel angeordnet, ist der Hochspannungsanschluss 8 beispielsweise als Durchführung ausführt. Die Durchführung durchgreift die Kesselwand und ist an ihrem freien, außerhalb des Kessels angeordneten Ende mit einem Freiluftanschluss ausgerüstet. Der figürlich nicht dargestellte Freiluftanschluss dient zum Anschluss eines luftisolierten Leiters. An ihrem Niederspannungsende 9 sind die erste Hochspannungswicklung 5 und die zweite Hochspannungswicklung 6 jeweils mit einem Sättigungsschaltzweig 10 beziehungsweise 11 verbunden, wobei jeder Sättigungsschaltzweig 10, 11 ein zweipoliges Submodul 12 aufweist, das mit einer ersten Anschlussklemme 13 mit der jeweiligen Hochspannungswicklung 5 beziehungsweise 6 und mit einer zweiten Anschlussklemme 14 mit einem gemeinsamen Potenzialpunkt 15 verbunden ist. Der Potenzialpunkt 15 ist in dem gezeigten Ausführungsbeispiel geerdet. Mit anderen Worten sind die Hochspannungswicklungen 5 und 6 einander parallel geschaltet oder zumindest schaltbar.

Über den Hochspannungsanschluss 8 sind die Hochspannungswicklungen 5 und 6 mit einem Phasenleiter 16 eines Hochspannungsnetzes 17 verbunden, wobei das Hochspannungsnetz 17 zwei weitere Phasenleiter 18 und 19 aufweist, die jeweils wieder über einen Hochspannungsanschluss 8 mit zwei Hochspannungswicklungen und zwei Sättigungsschaltzweigen verbunden sind. Mit anderen Worten weist die Vorrichtung 1 für jede Phase 16, 18, 19 des Hochspannungsnetzes 17 einen identischen Aufbau auf, wobei hier aus Gründen der Übersicht lediglich der Aufbau für einen Phasenleiter 16 gezeigt ist.

Wesentlich im Rahmen der Erfindung ist, dass jeder Sättigungsschaltzweig 10 beziehungsweise 11, ein zweipoliges Submodul 12 aufweist, das über eine Brückenschaltung aus Leistungshalbleiterschaltern 20, 21, 22 und 23 und eine Gleichspannungsquelle 24 verfügt, die bevorzugt unipolar ausgebildet ist und einen somit einen festen Plus- und einen festen Minuspol aufweist.

Die Brückenschaltung kann im Rahmen der Erfindung eine Halbrücke oder eine Vollbrücke sein. In Figur 1 verfügt jedes Submodul über eine Vollbrücke mit vier Leistungshalbleiterschaltern 20, 21, 22, 23. Eine Halbbrücke umfasst lediglich zwei Leistungshalbleiterschalter. Zum zweckmäßigen Ansteuern der vier Leistungshalbleiterschalter 20, 21, 22 und 23 ist eine Steuerungseinheit 26 vorgesehen, die eingangsseitig mit Sollwerten für die Spannung UACₛₒₗₗ, den Wechselstrom IACₛₒₗₗ und die Blindleistung QACₛₒₗₗ versorgt werden kann. Zum Erfassen des von dem Phasenleiter 16 zu den Hochspannungswicklungen 5 und 6 fließenden Wechselstromes IAC dient ein Stromsensor 27, wobei ein Spannungssensor 28 die hochspannungsseitig der Hochspannungswicklung 5 und 6 abfallende Spannung erfasst. Der Stromsensor 27 und der Spannungssensor 28 sind über figürlich nicht dargestellte Signalleitungen mit der Steuerungseinheit 26 verbunden. An der Niederspannungsseite 9 der Hochspannungswicklung 5 beziehungsweise 6 sind ebenfalls Sensoren 29 und 30 erkennbar, die ebenfalls über Signalleitungen mit der Steuerungseinheit 26 verbunden sind und Ströme erfassen, die zwischen dem jeweiligen Submodul 12 und der jeweiligen Hochspannungswicklung 5 beziehungsweise 6 fließen.

Die Leistungshalbleiterschalter 20, 21, 22 und 23 eines Submoduls 12 können durch zweckmäßige Ansteuersignale, die durch gestrichelte Linien dargestellt sind, von der Steuerungseinheit 26 von einer Trennstellung, in welcher ein Stromfluss über die Leistungshalbleiterschalter unterbrochen ist, in eine Durchgangsstellung, in der ein Stromfluss über die Leistungshalbleiterschalter ermöglicht ist, überführt werden oder umgekehrt von der Durchgangsstellung in die Trennstellung.

Die Betriebsweise der Vorrichtung 1 ist wie folgt: Ist die von dem Spannungssensor 28 erfasste Spannung positiv, sind die Leistungshalbleiterschalter 22 und 23 des Sättigungsschaltkreises 10 geschlossen. Es sei an dieser Stelle vorausgesetzt, dass der Kernschenkel 3 zuvor durch einen von dem Submodul 12 des ersten Sättigungsschaltzweiges zur Hochspannungswicklung 5 fließenden Gleichstrom gesättigt wurde, so dass für die positiven Halbwelle der Wechselspannung der Wechselwiderstand der Hochspannungswicklung 5 kleiner ist als der Wechselwiderstand der Hochspannungswicklung 6. Somit fließt nahezu der gesamte Wechselstrom IAC über den mit I1 bezeichneten Strompfad zur Erde hin ab. In der positiven Halbwelle der Wechselspannung werden daher die Leistungshalbleiterschalter 21 und 22 geschlossen, so dass die Gleichspannungsquelle 24 des Sättigungsschaltkreises 11 einen Gleichstrom treibt, der von der Hochspannungswicklung 6 zur Erde 15 fließt. Während der positiven Halbwelle der Wechselspannung im Phasenleiter 16 kann somit der zweite Kernschenkel 4 in der gewünschten Weise gesättigt werden.

Während der negativen Halbwelle, in welcher die von der dem Sensor 28 gemessene Spannung negativ ist, fließt der Wechselstrom IAC hingegen im Wesentlichen über die zweite Hochspannungswicklung 6, so dass durch Schließen der Leistungshalbleiterschalter 20 und 23 und Öffnen der Leistungshalbleiterschalter 21 und 22 des Submoduls 12 des ersten Sättigungsschaltzweiges 10 ein Sättigungsgleichstrom erzeugt wird, der von dem Submodul 12 zur ersten Hochspannungswicklung 5 oder umgekehrt fließt und für die gewünschte Sättigung des Kernschenkels 3 sorgt.

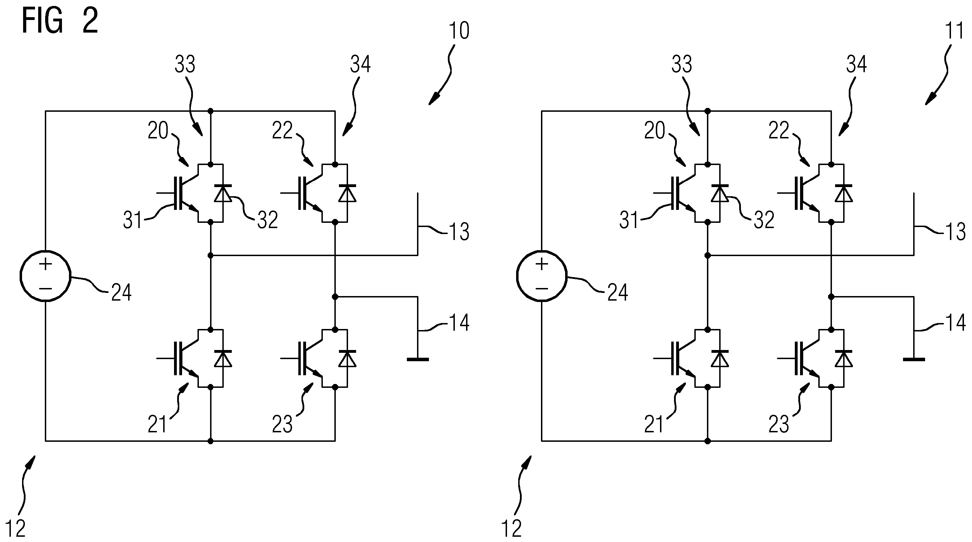

Figur 2 zeigt den Aufbau der Submodule 12 des ersten und zweiten Sättigungsschaltkreises 10, 11 genauer. Es ist erkennbar, dass die Submodule für beide Sättigungsschaltzweige 10 beziehungsweise 11 identisch aufgebaut sind. Es ist ferner erkennbar, dass die Leistungshalbleiterschalter 20, 21, 22, 23 einen so genannten IGBT 31 umfassen, dem eine Freilaufdiode 32 gegensinnig parallel geschaltet ist. Der Aufbau eines IGBTs mit Freilaufdiode ist grundsätzlich bekannt, so dass an dieser Stelle auf deren Wirkungsweise nicht genauer eingegangen zu werden braucht. Wesentlich ist, dass die Freiluftdiode 22 zum Schutz des IGBTs vor Überspannungen in Rückwärtsrichtung dient. Dabei sind IGBT 31 und Diode 32 in der Regel in einem gemeinsamen Schaltergehäuse untergebracht. IGBT 31 und Freilaufdiode 32 werden hier gemeinsam als Leistungshalbleiter bezeichnet.

Jedes Modul 12 ist als so genannte Vollbrücke ausgeführt und umfasst einen ersten Reihenschaltungszweig 33 und einen zweiten Reihenschaltungszweig 34 aus jeweils zwei in Reihe geschalteten Leistungshalbleiterschaltern 20, 21 beziehungsweise 22 und 23. Der Potenzialpunkt zwischen den Leistungshalbleiterschaltern 20, 21 des ersten Reihenschaltungszweiges 33 ist mit der ersten Anschlussklemme 13 und der Potenzialpunkt zwischen den Leistungshalbleiterschaltern 22 und 23 des zweiten Reihenschaltungszweiges 34 ist mit der Anschlussklemme 14 des Submoduls 12 verbunden.

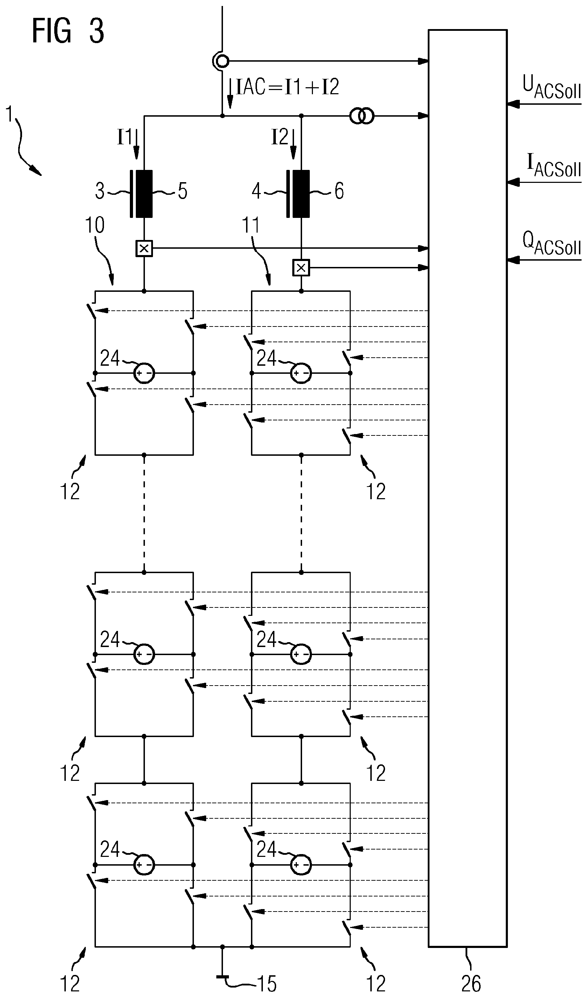

Figur 3 zeigt ein weiteres Ausführungsbeispiel der erfindungsgemäßen Vorrichtung 1, wobei aus Gründen der Übersicht lediglich die Bauteile zur Verbindung mit einer Phase des Hochspannungsnetzes 17 gezeigt sind. Weiterhin sind die Hochspannungsanschlüsse 8 und der Kessel 2 nicht mehr verdeutlicht.

Es ist erkennbar, dass jeder Sättigungsschaltzweig 10 beziehungsweise 11 aus einer Reihenschaltung aus mehreren Submodulen 12 besteht, die von der Steuerungseinheit 26 entweder alle identisch oder unterschiedlich angesteuert werden, so dass die Gleichspannung zum Erzeugen des zur Sättigung der Kernschenkel 3, 4 dienenden Gleichstroms den jeweiligen Anforderungen entsprechend skalierbar ist.

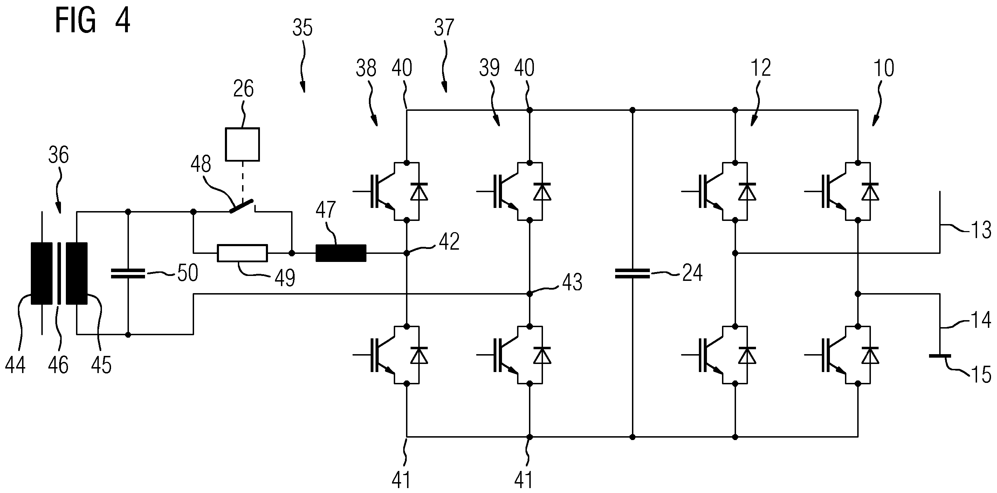

Figur 4 zeigt ein Submodul 12 gemäß Figur 2, wobei der Energiespeicher 24 als unipolarer Kondensator ausgebildet ist. Ferner ist eine Ladeeinheit 35 verdeutlicht, die aus einer Wechselstromquelle 36 und einem Gleichrichter 37 zusammengesetzt ist. Der Gleichrichter 37 besteht aus zwei Phasenmodulzweigen 38 und 39, die jeweils einen Gleichspannungsanschluss 40 beziehungsweise 41 sowie einen Wechselspannungsanschluss 42 und 43 aufweisen. Zwischen dem Wechselspannungsanschluss 42, 43 und jedem Gleichspannungsanschluss 40 bzw. 41. ist ein Schaltzweig angeordnet, der mit wenigstens einem Leistungshalbleiter bestückt ist. Der Gleichspannungsanschluss 40 ist mit einem ersten Pol des Kondensators 24 verbunden, wobei der Gleichspannungsanschluss 41 mit dem zweiten Pol des Kondensators 24 verbunden ist. Ein solcher Gleichrichter ist jedoch bekannt, so dass so dass auf eine genauere Darstellung seiner Topologie und Wirkungsweise an dieser Stelle verzichtet werden kann.

Die Wechselspannungsquelle 36 ist als Transformator realisiert, der eine Primärwicklung 44 sowie eine Sekundärwicklung 45 aufweist, die über einen Kern 46 induktiv miteinander gekoppelt sind. Zur Glättung der entstehenden Wechselspannung dient eine Glättungsdrossel 47. Die Ladeeinheit 35 verfügt ferner über einen Schalter 48, der einem Schaltwiderstand 49 parallel geschaltet ist. Mit Hilfe des Schalters 48 kann der Widerstand 49 zugeschaltet oder überbrückt werden, so dass es zur gewünschten Aufladung des Kondensators 24 des Submoduls 12 kommt. Ein Beschaltungskondensator 50 dient zur Vermeidung von Überspannungen an der Sekundärwicklung 45.

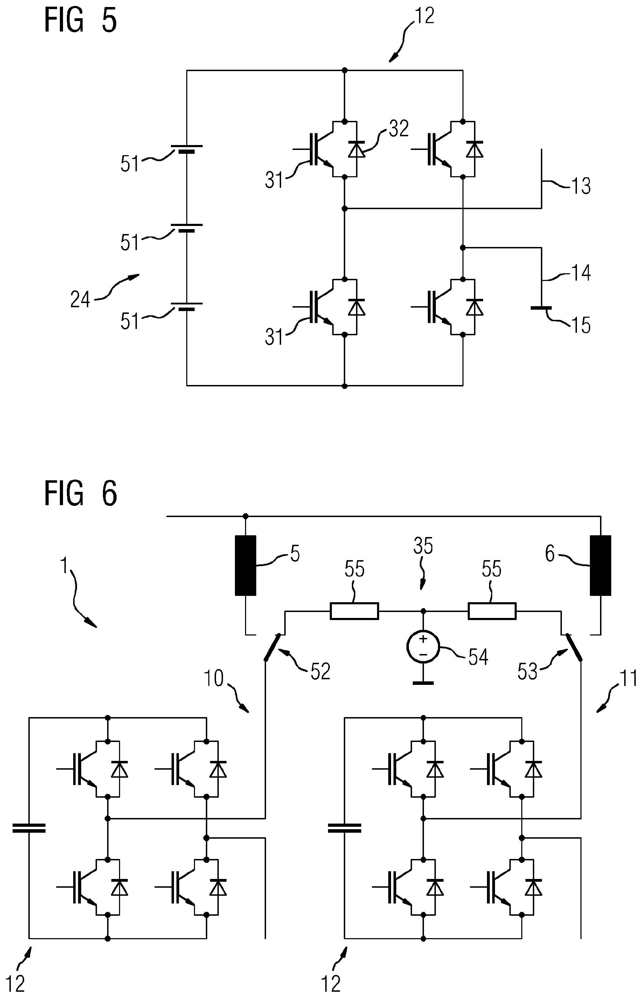

Figur 5 zeigt ein weiteres Ausführungsbeispiel eines Submoduls 12, das anstelle eines einzelnen Kondensators als Gleichspannungsquelle 24 eine Reihenschaltung mehrerer Batterien 51 aufweist. Anstelle von Batterien 51 können bei einer abweichenden Ausgestaltung der Erfindung aufladbare Akkumulatoren eingesetzt werden.

Figur 6 zeigt ein weiteres Ausführungsbeispiel der erfindungsgemäßen Vorrichtung, die eine gegenüber der Vorrichtung gemäß Figur 4 abweichende Ladeeinheit 35 aufweist. Die gezeigte Ladeeinheit dient nur für die anfängliche Aufladung der Schaltzweige gedacht, bis der Betriebszustand hergestellt. Anschließend kann der Ladezweig 35 entfernt werden und jeder Schaltzweig durch geschickte Regelung aus dem Laststrom versorgt werden. Die Gleichspannungsquelle 24 der Submodule 12 ist wieder als Kondensator ausgeführt. In diesem Falle ist jedoch jeder Sättigungsschaltzweig 10 oder 11 über einen Ladeschalter 52 beziehungsweise 53 mit der Ladeeinheit 35 verbindbar, so dass für beide Sättigungsschaltzweige 10, 11 lediglich eine Ladeeinheit vorgesehen ist. In dem in Figur 6 schematisch gezeigten Fall verfügt die Ladeeinheit 35 wieder über eine Gleichspannungsquelle 54, die über zweckmäßige Beschaltungswiderstände 55 mit den jeweiligen Ladeschaltern 52 beziehungsweise 53 verbunden ist. Die Gleichspannungsquelle 54 umfasst beispielsweise einen Gleichrichter, der mit einer Wechselstromquelle verbunden ist. Abweichend davon ist die Gleichspannungsquelle 54 als Batterie, Supercap, Akkumulator oder dergleichen ausgeführt.

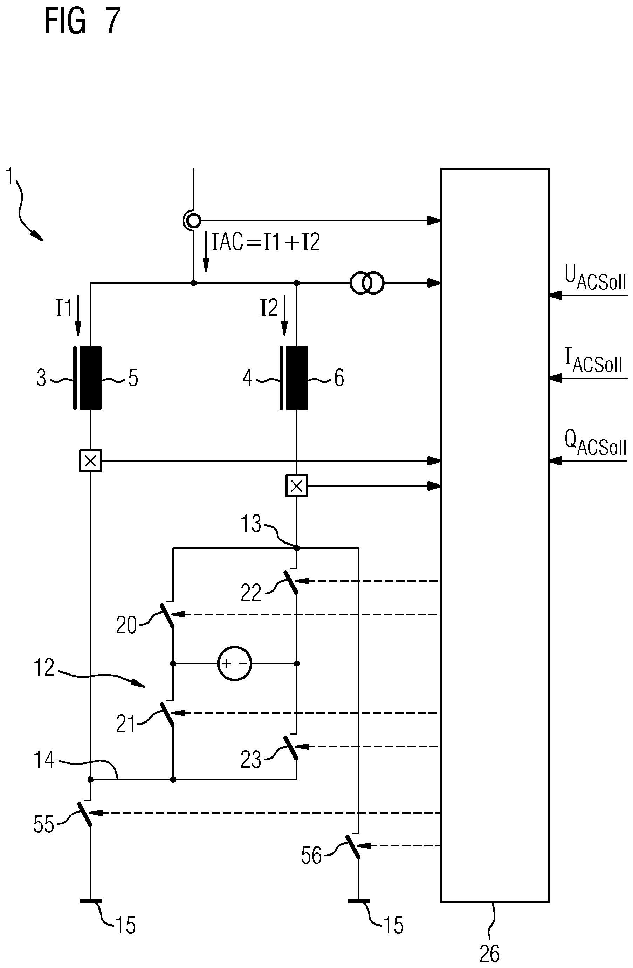

Figur 7 zeigt ein weiteres Ausführungsbeispiel der erfindungsgemäßen Vorrichtung 1, die sich von dem in den vorherigen Figuren gezeigten Vorrichtungen 1 dahin unterscheidet, dass lediglich ein Sättigungsschaltkreis 10 vorgesehen ist, der sowohl mit dem Niederspannungsende 9 der ersten Hochspannungswicklung 5 als auch mit dem Niederspannungsende 9 der zweiten Hochspannungswicklung 6 verbunden ist. Dazu ist die erste Anschlussklemme 13 des Submoduls 12 an die zweite Hochspannungswicklung 6 angeschlossen, während die zweite Anschlussklemme 14 des Submoduls 12 mit der Niederspannungsseite 9 der ersten Hochspannungswicklung 5 verbunden ist. Sowohl die erste Anschlussklemme 13 als die zweite Anschlussklemme 14 sind mit Hilfe der Erdungsschalter 55 beziehungsweise 56 mit dem Erdpotenzial 15 verbindbar, wobei die Schalter 55 beziehungsweise 56 als Leistungshalbleiterschalter ausgebildet und von der Steuerungseinheit 26 ansteuerbar sind. Die hierzu notwendigen Signalleitungen sind mit den Ladeschaltern 55, 56 und der Steuereinheit 26 verbunden und in Figur 7 gestrichelt dargestellt. Um das Submodul 12 mit der gewünschten Polarisierung zwischen die erste Hochspannungswicklung 5 und Erde 15 zu schalten, wird der Erdungsschalter 55 geöffnet und der Erdungsschalter 56 geschlossen. Durch Schließen der Leistungshalbleiterschalter 21 und 22 ist die Gleichspannungsquelle 24 in Reihe zur ersten Hochspannungswicklung 5 geschaltet und treibt einen Sättigungsgleichstrom vom Submodul 12 zur Hochspannungswicklung 5 hin. Durch Öffnen des Erdungsschalters 56 und Schließen des Erdungsschalters 55 und durch Schließen der Leistungshalbleiterschalter 22 und 21, wobei die Leistungshalbleiterschalter 20 und 23 geöffnet sind, kann die Gleichspannungsquelle 24 mit der gewünschten Polarisierung in Reihe zur zweiten Hochspannungswicklung 6 geschaltet werden.

## Patentansprüche

1. Vorrichtung (1) zur Blindleistungskompensation in einem wenigstens einen Phasenleiter (16,18,19) aufweisenden Hochspannungsnetz (17) mit wenigstens einem Hochspannungsanschluss (8), der zur Verbindung mit dem Phasenleiter (16) eingerichtet ist, wobei für jeden Hochspannungsanschluss (8)
- ein erster und ein zweiter Kernabschnitt (3,4), die Teil eines geschlossenen Magnetkreises sind,
- eine erste Hochspannungswicklung (5), die den ersten Kernabschnitt (3) umschließt und
- eine zweite Hochspannungswicklung (6), die den zweiten Kernabschnitt (4) umschließt und parallel zur ersten Hochspannungswicklung (15) geschaltet ist,
- wenigstens ein Sättigungsschaltzweig (10,11), der zum Sättigen der Kernabschnitte (3,4) eingerichtet ist und ansteuerbare Leistungshalbleiterschalter (20,21,22,23) aufweist, und
- eine Steuerungseinheit (26) zum Ansteuern der Leistungshalbleiterschalter (20,21,22,23) vorgesehen sind,
wobei die erste und die zweite Hochspannungswicklung (5,6) mit ihrem Hochspannungsende (7) mit dem zugeordneten Hochspannungsanschluss (8) verbunden und an ihrer Niederspannungsseite (9) mit einem Sättigungsschaltzweig (10,11) verbindbar sind,
**dadurch gekennzeichnet, dass**
jeder Sättigungsschaltzweig (10,11) wenigstens ein zweipoliges Submodul (12) mit einer Brückenschaltung aufweist, die über die ansteuerbaren Leistungshalbleiterschalter (20,21,22,23) und eine Gleichspannungsquelle (24) verfügt, so dass je nach Ansteuerung der Leistungshalbleiterschalter (20,21,22,23) die Gleichspannungsquelle (24) entweder in Reihe zu der mit diesem Sättigungsschaltzweig (10,11) verbundenen Hochspannungswicklung (5,6) schaltbar oder überbrückbar ist.

2. Vorrichtung (1) nach Anspruch 1,
**dadurch gekennzeichnet, dass**
jeder Sättigungsschaltzweig (10,11) an seinem von der zugeordneten Hochspannungswicklung (5,6) abgewandten Seite mit einem Erdanschluss (15) verbindbar ist.

3. Vorrichtung (1) nach einem der vorhergehenden Ansprüche,
**dadurch gekennzeichnet, dass**
jedes Submodul (2) eine Vollbrückenschaltung ausbildet, die einen ersten Reihenschaltungszweig (33) und einen zweiten Reihenschaltungszweig (34) aufweist, die der Gleichspannungsquelle (24) jeweils parallel geschaltet sind, jeder Reihenschaltungszweig (33,34) eine Reihenschaltung aus zwei Leistungshalbleiterschaltern (20,21,22,23) aufweist, wobei der Potenzialpunkt zwischen den Leitungshalbleiterschaltern (20,21) des ersten Reihenschaltungszweiges (33) mit einer ersten Anschlussklemme (13) des Submoduls (12) und der Potenzialpunkt zwischen den Leistungshalbleiterschaltern (22,23) des zweiten Reihenschaltungszweiges (34) mit der zweiten Anschlussklemme (14) des Submoduls (12) verbunden ist.

4. Vorrichtung (1) nach einem der vorhergehenden Ansprüche,
**dadurch gekennzeichnet, dass**
jeder Leistungshalbleiterschalter (20,21,22,23) ein IGBT (33) mit gegensinnig parallel geschalteter Freilaufdiode (32), ein GTO oder ein Transistorschalter ist.

5. Vorrichtung (1) nach einem der vorhergehenden Ansprüche,
**dadurch gekennzeichnet, dass**
jeder Sättigungsschaltzweig (10,11) eine Reihenschaltung aus wenigstens zwei Submodulen (12) ist.

6. Vorrichtung (1) nach einem der vorhergehenden Ansprüche,
**dadurch gekennzeichnet, dass**
jede Gleichspannungsquelle (24) einen Energiespeicher umfasst.

7. Vorrichtung (1) nach Anspruch 6,
**dadurch gekennzeichnet, dass**
der Energiespeicher (24) mit einer Ladeeinheit (35) verbindbar ist, die zum Aufladen des Energiespeichers (24) eingerichtet ist.

8. Vorrichtung (1) nach Anspruch 7,
**dadurch gekennzeichnet, dass**
die Ladeeinheit (35) einen mit einer Wechselspannungsquelle (36) verbundenen Gleichrichter (37) aufweist.

9. Vorrichtung (1) nach einem der vorhergehenden Ansprüche,
**dadurch gekennzeichnet, dass**
für jede Hochspannungswicklung (5,6) ein Sättigungsschaltzweig (10,11) vorgesehen ist.

10. Vorrichtung (1) nach Anspruch 7,
**dadurch gekennzeichnet, dass**
die Ladeeinheit (35) induktiv mit dem Energiespeicher (24) gekoppelt ist.

11. Vorrichtung (1) nach einem der vorhergehenden Ansprüche,
**dadurch gekennzeichnet, dass**
jeder Kernabschnitt (3,4), jede Hochspannungswicklung (5,6) und jeder Sättigungsschaltzweig (10,11) in einem Kessel (2) angeordnet sind, der mit einem Isolierfluid befüllt ist.

12. Verfahren zur Blindleistungskompensation in einem wenigstens einen Phasenleiter (16,18,19) aufweisenden Hochspannungsnetz (17), der eine Netzwechselspannung führt, wobei eine Vorrichtung nach einem der Ansprüche 1 bis 11 eingesetzt wird, wobei jeder Phasenleiter (16,18,19) über einen Hochspannungsanschluss (8) mit einer ersten Hochspannungswicklung (5) und einer zu dieser parallel geschalteten zweiten Hochspannungswicklung (6) verbunden ist, die jeweils einen ersten und einen zweiten Kernabschnitt (3,4) umschließen, wobei jede Hochspannungswicklung (5,6) über wenigstens einen Sättigungsschaltzweig (10,11) mit einem Erdanschluss (13) verbindbar ist, der wenigstens ein Submodul (12) mit einer Brückenschaltung aus einer Gleichspannungsquelle (24) und Leistungshableiterschaltern (20,21,22,23) aufweist, bei dem
- bei einer positiven Netzwechselspannung die Leistungshalbleiterschalter so angesteuert werden, dass durch die zweite Hochspannungswicklung ein gewünschter Gleichstrom fließt und
- bei einer negativen Netzwechselspannung die Leistungshalbleiter so angesteuert werden, dass durch die erste Hochspannungswicklung ein gewünschter Gleichstrom fließt, wobei die Gleichströme so eingestellt werden, dass eine gewünschte Sättigung der Kernabschnitte (3,4) erzeugt wird.

## Claims

1. A device (1) for reactive-power compensation in a high-voltage network (17) having at least one phase conductor (16,18,19) with at least one high-voltage terminal (8) configured for connection to the phase conductor (16), wherein, for each high-voltage terminal (8),
- a first and second core section (3,4) which are part of a closed magnetic circuit,
- a first high-voltage winding (5) surrounding the first core section (3) and
- a second high-voltage winding (6) surrounding the second core section (4) and connected in parallel to the first high-voltage winding (15),
- at least one saturation switching branch (10,11) configured for saturating the core sections (3,4) and having controllable power semiconductor switches (20,21,22,23), and
- a control unit (26) for controlling the power semiconductor switches (20,21,22,23) are provided,
wherein the first and second high-voltage windings (5,6) are connected by their high-voltage ends (7) to the associated high-voltage terminal (8) and connectable on their low-voltage sides (9) to a saturation switching branch (10,11),
**characterised in that**
each saturation switching branch (10,11) has at least one two-pole submodule (12) with a bridge circuit which has the controllable power semiconductor switches (20,21,22,23) and a direct-voltage source (24), so that, in accordance with the control of the power semiconductor switches (20,21,22,23), the direct-voltage source (24) is either connectable in series to the high-voltage winding (5,6) connected to said saturation switching branch (10,11), or bridgeable.

2. The device (1) according to claim 1,
**characterised in that**
each saturation switching branch (10,11) is connectable to a ground terminal (15) on its side facing away from the associated high-voltage winding (5,6).

3. The device (1) according to any of the preceding claims, **characterised in that** each submodule (2) forms a full-bridge circuit having a first series-connection branch (33) and a second series-connection branch (34), each connected in parallel to the direct-voltage source (24), each series-connection branch (33,34) having a series connection consisting of two power semiconductor switches (20,21,22,23), wherein the potential point between the power semiconductor switches (20,21) of the first series-connection branch (33) is connected to a first terminal clamp (13) of the submodule (12) and the potential point between the power semiconductor switches (22,23) of the second series-connection branch (34) is connected to the second terminal clamp (14) of the submodule (12).

4. The device (1) according to any one of the preceding claims,
**characterised in that**
each power semiconductor switch (20,21,22,23) is an IGBT (33) with a freewheeling diode (32) connected in parallel in opposite directions, a GTO or a transistor switch.

5. The device (1) according to any of the preceding claims, **characterised in that** each saturation switching branch (10,11) is a series connection consisting of at least two submodules (12).

6. The device (1) according to any of the preceding claims, **characterised in that** each direct-voltage source (24) comprises an energy storage.

7. The device (1) according to claim 6,
**characterised in that**
the energy storage (24) is connectable to a charging unit (35) configured for charging the energy storage (24).

8. The device (1) according to claim 7,
**characterized in that** the charging unit (35) has a rectifier (37) connected to an alternating-voltage source (36).

9. The device (1) according to any one of the preceding claims, **characterised in that**
for each high-voltage winding (5,6), a saturation switching branch (10,11) is provided.

10. The device (1) according to claim 7,
**characterized in that** the charging unit (35) is inductively coupled to the energy storage (24).

11. The device (1) according to any of the preceding claims, **characterised in that** each core section (3,4), each high-voltage winding (5,6) and each saturation switching branch (10,11) are arranged in a tank (2) filled with an insulating fluid.

12. A method for reactive-power compensation in a high-voltage network (17) having at least one phase conductor (16,18,19) conducting an alternating network voltage, wherein a device according to any of claims 1 to 11 is deployed, wherein each phase conductor (16,18, 19) is connected through a high-voltage terminal (8) to a first high-voltage winding (5) and a second high-voltage winding (6) connected in parallel thereto, each surrounding a first and second core section (3,4), wherein each high-voltage winding (5,6) is connectable through at least one saturation switching branch (10,11) to a grounding terminal (13) having at least one submodule (12) with a bridging circuit consisting of a direct-voltage source (24) and power semiconductor switches (20,21,22,23), in which
- with a positive alternating network voltage, the power semiconductor switches are controlled such that a desired direct current flows through the second high-voltage winding, and
- with a negative alternating network voltage, the power semiconductors are controlled such that a desired direct current flows through the first high-voltage winding, wherein the direct currents are set such that a desired saturation of the core sections (3,4) is generated.

## Revendications

1. Dispositif (1) de compensation de puissance réactive dans un réseau haute tension (17) comprenant au moins un conducteur de phase (16, 18, 19) avec au moins un raccordement haute tension (8) qui est configuré pour être relié audit conducteur de phase (16), dans lequel pour chaque raccordement haute tension (8)
- une première et une deuxième section de noyau (3, 4), lesquelles font partie d'un circuit magnétique fermé,
- un premier enroulement haute tension (5) qui entoure la première section de noyau (3),
- un deuxième enroulement haute tension (6) qui entoure la deuxième section de noyau (4) et qui est monté en parallèle avec le premier enroulement haute tension (15),
- au moins une branche de commutation de saturation (10, 11), laquelle est configurée pour saturer les sections de noyau (3, 4) et présente des commutateurs à semi-conducteurs de puissance (20, 21, 22, 23) pouvant être commandés, et
- une unité de commande (26) prévue pour commander les commutateurs à semi-conducteurs de puissance (20, 21, 22, 23),
dans lequel le premier et le deuxième enroulement haute tension (5, 6) sont reliés, par leur extrémité haute tension (7), à la borne haute tension (8) associée et peuvent être reliés, au niveau de leur côté basse tension (9), à une branche de commutation par saturation (10, 11),
**caractérisé en ce que**
chaque branche de commutation par saturation (10, 11) présente au moins un sous-module bipolaire (12) comportant un montage en pont qui dispose de commutateurs semi-conducteurs de puissance (20, 21, 22, 23) commandables et d'une source de tension continue (24), de sorte que, selon la commande des commutateurs semi-conducteurs de puissance (20, 21, 22, 23), la source de tension continue (24) peut soit être commutée en série avec l'enroulement haute tension (5, 6) relié à ladite branche de commutation par saturation (10, 11), soit être shuntée.

2. Dispositif (1) selon la revendication 1,
**caractérisé en ce que**
chaque branche de commutation par saturation (10, 11) peut être reliée à une prise de terre (15) au niveau de son côté opposé à l'enroulement haute tension (5, 6) associé.

3. Dispositif (1) selon l'une quelconque des revendications précédentes, **caractérisé en ce que** chaque sous-module (2) forme un montage en pont complet, qui présente une première branche de montage en série (33) et une deuxième branche de montage en série (34) qui sont chacune montées en parallèle avec la source de tension continue (24), chaque branche de montage en série (33, 34) présente un montage en série de deux commutateurs semi-conducteurs de puissance (20, 21, 22, 23), dans lequel le point de potentiel entre les commutateurs semi-conducteurs de puissance (20, 21) de la première branche de montage en série (33) est relié à une première borne de raccordement (13) du sous-module (12) et le point de potentiel entre les commutateurs semi-conducteurs de puissance (22, 23) de la deuxième branche de montage en série (34) est relié à la deuxième borne de raccordement (14) du sous-module (12).

4. Dispositif (1) selon l'une quelconque des revendications précédentes, **caractérisé en ce que**
chaque commutateur semi-conducteur de puissance (20, 21, 22, 23) est un IGBT (33) avec une diode de roue libre (32) montée en parallèle et en opposition, un GTO ou un commutateur à transistor.

5. Dispositif (1) selon l'une quelconque des revendications précédentes, **caractérisé en ce que** chaque branche de commutation par saturation (10, 11) est un montage en série d'au moins deux sous-modules (12).

6. Dispositif (1) selon l'une quelconque des revendications précédentes, **caractérisé en ce que** chaque source de tension continue (24) comprend un accumulateur d'énergie.

7. Dispositif (1) selon la revendication 6,
**caractérisé en ce que**
l'accumulateur d'énergie (24) peut être relié à une unité de charge (35) qui est conçue pour charger l'accumulateur d'énergie (24).

8. Dispositif (1) selon la revendication 7,
**caractérisé en ce que** l'unité de charge (35) présente un redresseur (37) relié à une source de tension alternative (36).

9. Dispositif (1) selon l'une quelconque des revendications précédentes, **caractérisé en ce**
**qu'**une branche de commutation par saturation (10, 11) est prévue pour chaque enroulement haute tension (5, 6).

10. Dispositif (1) selon la revendication 7,
**caractérisé en ce que** l'unité de charge (35) est couplée par induction avec l'accumulateur d'énergie (24).

11. Dispositif (1) selon l'une des revendications précédentes, **caractérisé en ce que** chaque section de noyau (3, 4), chaque enroulement haute tension (5, 6) et chaque branche de commutation par saturation (10, 11) sont disposés dans une cuve (2) qui est remplie d'un fluide isolant.

12. Procédé de compensation de puissance réactive dans un réseau haute tension (17) présentant au moins un conducteur de phase (16, 18, 19) qui achemine une tension alternative de réseau, dans lequel un dispositif selon l'une des revendications 1 à 11 est utilisé, dans lequel chaque conducteur de phase (16, 18, 19) est relié, via une borne haute tension (8), à un premier enroulement haute tension (5) et à un deuxième enroulement haute tension (6) monté en parallèle avec celui-ci, lesquels entourent respectivement une première et une deuxième section de noyau (3, 4), dans lequel chaque enroulement haute tension (5, 6) peut être relié, via au moins une branche de commutation par saturation (10, 11), à une prise de terre (13) qui présente au moins un sous-module (12) comportant un montage en pont constitué d'une source de tension continue (24) et de commutateurs semi-conducteurs de puissance (20, 21, 22, 23), dans lequel
- en présence d'une tension alternative de réseau positive, les commutateurs semi-conducteurs de puissance sont commandés de telle sorte qu'un courant continu souhaité circule à travers le deuxième enroulement haute tension, et
- en présence d'une tension alternative de réseau négative, les semi-conducteurs de puissance sont commandés de telle sorte qu'un courant continu souhaité circule à travers le premier enroulement haute tension, dans lequel les courants continus sont réglés de telle sorte qu'une saturation souhaitée des sections de noyau (3, 4) est générée.
